Europäisches Patentamt

European Patent Office

Office européen des brevets

(11) Numéro de publication : **0 039 872**
**B1**

(12) **FASCICULE DE BREVET EUROPÉEN**

(45) Date de publication du fascicule du brevet :
03.04.85

(51) Int. Cl.⁴ : **F 16 L   3/18**

(21) Numéro de dépôt : **81103360.4**

(22) Date de dépôt : **05.05.81**

(54) **Patin de support pour tuyauterie horizontale de fluide.**

(30) Priorité : **08.05.80 FR 8010276**

(43) Date de publication de la demande :
**18.11.81 Bulletin 81/46**

(45) Mention de la délivrance du brevet :
**03.04.85 Bulletin 85/14**

(84) Etats contractants désignés :
**BE CH DE FR GB IT LI**

(56) Documents cités :
**CH-A-    432 154**
**DE-A- 2 504 222**
**FR-A- 1 299 572**
**US-A- 2 113 083**

(73) Titulaire : **STEIN INDUSTRIE Société anonyme dite:**
**19-21, Avenue Morane Saulnier B.P. 74**
**F-78141 Velizy-Villacoublay (FR)**

(72) Inventeur : **Fournier, Jean**
**12 Chemin sous la Ville**
**F-78730 Rochefort en Yvelines (FR)**
Inventeur : **Patron, Henri**
**2 Allée des Marronniers**
**F-92350 Le Plessis Robinson (FR)**

(74) Mandataire : **Weinmiller, Jürgen et al**
**Zeppelinstrasse 63**
**D-8000 München 80 (DE)**

Jouve, 18, rue St-Denis, 75001 Paris, France

# Description

La présente invention concerne un patin de support pour tuyauterie horizontale de fluide soumise à des dilatations et contractions thermiques importantes, correspondant au préambule de la revendication 1 (DE-A-2.504.222).

De tels patins servent notamment au support de collecteurs ou tuyauteries horizonales de vapeur dans des chaudières, générateurs de vapeurs ou centrales de production d'énergie électrique.

De tels collecteurs ou tuyauteries doivent être fixés solidement à des charpentes rigides. Ils sont soumis à des contraintes de dilatation thermique très importantes, notamment lors de la mise en route, de l'arrêt ou des variations d'allure des installations, ainsi qu'à leur poids propre. Il convient que ces patins soient suffisamment massifs pour supporter ce poids, ainsi que celui des tuyauteries qui leur sont raccordées et ne sont pas supportées directement. Mais, du fait de leur caractère massif, ils ne suivent pas suffisamment vite les variations de température des collecteurs ou tuyauteries. On a jusqu'ici utilisé comme patins de support des semelles formant berceau pour le collecteur ou la tuyauterie, et libres de glisser sur une charpente support, par exemple deux semelles perpendiculaires, l'une transversale, l'autre parallèle à l'axe de la tuyauterie. Il n'en apparaît pas moins des contraintes entre le collecteur ou la tuyauterie, d'une part, et le patin d'autre part, susceptibles d'engendrer des déformations. Par ailleurs dans le cas habituel ou le collecteur ou la tuyauterie sont solidaires de tuyauteries externes dont les dilatations leur imposent des efforts longitudinaux, de tels patins ne permettent pas de compenser ces efforts.

On a aussi proposé dans le brevet CH-A-432 154 de souder sur une tuyauterie, de chaque côté de sa partie inférieure, une console munie d'une fente longitudinale supportée par deux rouleaux montés sur un support fixe. Une telle disposition laisse subsister des contraintes importantes sur la tuyauterie, du fait que celle-ci est soudée à des pièces massives dans lesquelles les variations de température ne se transmettent que progressivement.

La présente invention a pour but de remédier à ces inconvénients, et de procurer un patin de support pour tuyauterie horizontale de fluide qui permette une libre dilatation de celle-ci, accepte les contraintes correspondant à des moments s'exerçant suivant les trois axes, tout en présentant toute sécurité au point de vue support du poids de la tuyauterie.

Le patin selon l'invention est caractérisé en ce qu'il comprend en outre des tourillons soudés directement sur la tuyauterie au niveau de son axe et s'engageant dans lesdites lumières.

Il répond en outre de préférence à au moins l'une des caractéristiques suivantes :

— Les lumières sont ovales, de grand axe horizontal notablement supérieur au diamètre des tourillons, et de petit axe vertical légèrement supérieur à ce diamètre.

— Les tourillons sont constitués par des tronçons de tube.

Il est décrit ci-après, à titre d'exemple et en référence aux figures du dessin annexé, un patin de support selon l'invention pour collecteur de vapeur dans une centrale de production d'énergie électrique.

La figure 1 représente schématiquement en perspective ce patin de support.

La figure 2 représente en élévation vu de la direction de l'axe de la tuyauterie sur patin selon l'invention qui est ici fixé à une charpente support au-dessus de lui, et non au-dessous.

La figure 3 représente en élévation latérale le patin de la figure 2.

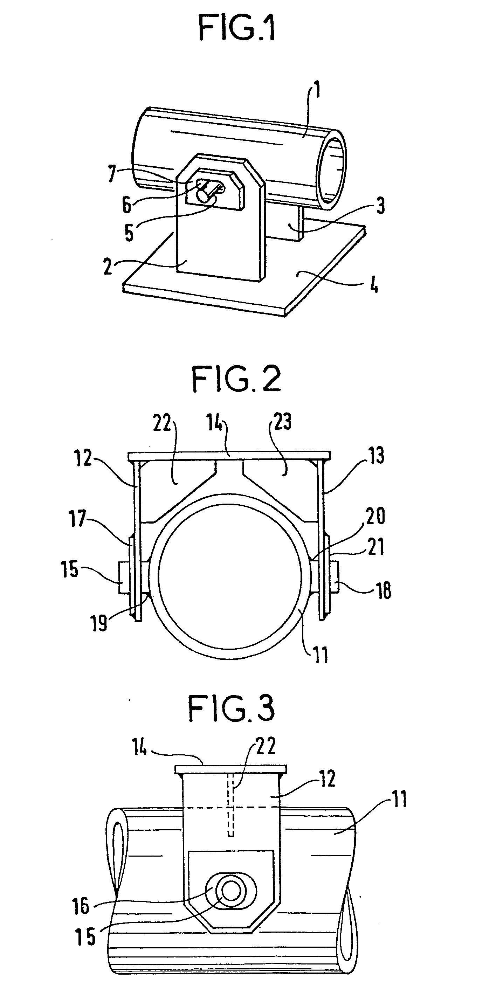

Dans la figure 1, le collecteur de vapeur 1 est supporté par les semelles verticales 2 et 3, de forme générale rectangulaire, parallèles à son axe et symétriques par rapport à celui-ci. Ces semelles sont soudées à une charpente support 4. Des tourillons tubulaires tels que 5 sont soudés sur le collecteur de chaque côté de celui-ci au niveau de son axe, et s'engagent dans des lumières allongées telles que 6 pratiquées dans les semelles, dans une zone renforcée par des contre-plaques telles que 7.

Le patin représenté en figures 2 et 3, destiné à supporter le collecteur 11, comprend les semelles verticales 12 et 13 soudées à la charpente support 14, qui se trouve au-dessus du collecteur. Des goussets 22 et 23 soudés d'une part à la charpente support et d'autre part respectivement aux semelles 12 et 13, complètent la solidarisation des semelles avec la charpente support. Des tourillons 15 et 18 soudés au collecteur au niveau de son axe, pénètrent dans des lumières oblongues telles que 16, allongées dans le sens de l'axe du collecteur. Les semelles sont renforcées autour de ces lumières par des contre-plaques 17, 21, soudées sur leurs faces externes. Le jeu entre la circonférence du tourillon et le pourtour de la lumière, important dans le sens longitudinal pour permettre les dilatations du collecteur, est faible dans le sens vertical.

On comprendra qu'un collecteur ou tuyauterie du genre qui vient d'être décrit ne sera pas supporté en général par un seul patin, mais par plusieurs patins répartis sur sa longueur. L'un des patins, disposé en un point défini comme centre des dilatations, pourra comporter des lumières circulaires, de diamètre légèrement supérieur à celui des tourillons.

# Revendications

1. Patin de support pour tuyauterie horizontale de fluide (1) soumise à des dilatations et contractions thermiques importantes, comprenant deux semelles verticales parallèles fixes (2, 3) de part et d'autre de l'axe de la tuyauterie, percées de lumières (6) allongées parallèlement à cet axe, caractérisé en ce qu'il comprend en outre des tourillons (5) soudés directement sur la tuyauterie au niveau de son axe et s'engageant dans lesdites lumières.

2. Patin selon la revendication 1, caractérisé en ce que les lumières (6, 16) sont ovales, de grand axe horizontal notablement supérieur au diamètre des tourillons (5, 15) et de petit axe vertical légèrement supérieur à ce diamètre.

3. Patin selon l'une des revendications 1 ou 2, caractérisé en ce que les tourillons sont constitués par des tronçons de tube.

4. Dispositif de suppport pour tuyauterie horizontale de fluide (1), caractérisé en ce qu'il comprend plusieurs patins selon la revendication 1, répartis sur la longueur de la tuyauterie.

## Claims

1. A support shoe for a horizontal fluid-pipe (1) which is submitted to important thermical expansions and contractions, comprising two vertical parallel fixed cheeks (2, 3) on both sides of the pipe axis, with holes (6) elongated parallelly to this axis, characterized in that it further comprises trunnions (5) which are directly welded onto the pipe at the level of its axis, these trunnions penetrating into said holes.

2. A shoe according to claim 1, characterized in that the holes (6, 16) are ovally shaped, the large horizontal axis of these holes being notably longer than the diameter of the trunnions (5, 15) and the small vertical axis being slightly longer than this diameter.

3. A shoe according to one of claims 1 or 2, characterized in that the trunnions are constituted by tube portions.

4. A support device for a horizontal fluid-pipe (1), characterized in that it comprises several shoes according to claim 1 spaced out on the length of the pipe.

## Ansprüche

1. Stützfuß für eine horizontale Fluid-Rohrleitung (1), die großen thermischen Dehnungen und Schrumpfungen ausgesetzt ist, mit zwei senkrechten, parallelen, festen Wangen (2, 3) zu beiden Seiten der Rohrleitungsachse, die sich parallel zu dieser Achse erstreckende längliche Öffnungen (6) aufweisen, dadurch gekennzeichnet, daß er außerdem Lagerzapfen (5) aufweist, die direkt in Höhe der Rohrachse auf die Leitung aufgeschweißt sind und in die Öffnungen eingreifen.

2. Stützfuß nach Anspruch 1, dadurch gekennzeichnet, daß die Öffnungen (6, 16) oval sind, wobei die große waagerechte Achse der Öffnungen deutlich größer als der Durchmesser der Lagerzapfen (5, 15) und die kleine senkrechte Achse geringfügig größer als dieser Durchmesser gewählt ist.

3. Stützfuß nach einem der Ansprüche 1 oder 2, dadurch gekennzeichnet, daß die Lagerzapfen aus Rohrabschnitten bestehen.

4. Stützvorrichtung für eine horizontale Fluid-Rohrleitung (1), dadurch gekennzeichnet, daß sie mehrere Stützfüße gemäß Anspruch 1 über die Länge der Leitung verteilt aufweist.

# FIG.1

# FIG.2

# FIG.3